# EUROPEAN PATENT APPLICATION

(11) **EP 0 931 706 A1**
(43) Date of publication of application: **28.07.1999**
(21) Application number: 99300542.0
(22) Date of filing: 26.01.1999
(51) Int. Cl.: B60R 21/32, B60R 22/46

(54) **Device and method for protecting a vehicle occupant**

(30) Priority: 27.01.1998 JP 1417998
(71) Applicant: TAKATA CORPORATION, Minato-ku, Tokyo (JP)
(72) Inventor: Yoshida, Ryoichi, c/o Takata Corporation, Tokyo (JP)
(74) Representative: Jenkins, Peter David

(57) **Abstract**

Protective devices including an airbag device and a seat belt device are provided which can detect collision speed early after the collision. The collision speed is calculated based on variation with time of the acceleration after the collision. The collision speed is calculated based on time difference Δt between a point, for example, when it is detected that the collision speed exceeds 12 mph and a point, for example, when it is detected that the collision speed exceeds 20 mph.

## Description

The present invention relates to a method and a device for protecting an occupant when a vehicle comes into collision and, more particularly, to a method and a device in which the amount of gas to be generated is controlled in accordance with a velocity of a vehicle at the collision.

A vehicle including an automobile is provided with a seat belt device and an airbag device to protect an occupant. When a vehicle comes into collision, a locking mechanism of the seat belt device is actuated to prevent the unwinding of a seat belt, and an inflator of the airbag device is actuated to inflate an airbag.

An acceleration sensor is installed in the vehicle for detecting vehicle collision. As a detected acceleration of the acceleration sensor reaches a predetermined value, the locking mechanism is actuated and the inflator is actuated to inflate the airbag.

The vehicle seat belt device comprises a seat belt and a retractor for winding up the seat belt. Also known as a mechanism to be provided in the seat belt device is a mechanism for winding up the seat belt to a predetermined tension in order to eliminate looseness of the seat belt during the collision.

In conventional seat belt devices, it is not known to control the tension for winding up the seat belt during the collision in accordance with a velocity of the vehicle at the collision.

A vehicle airbag device comprises an airbag which is folded, a casing in which the airbag is accommodated, and a gas generating means including an inflator for deploying the airbag. As an acceleration sensor installed in a vehicle outputs a collision detection signal, the gas generating means is actuated to generate gas so that the airbag is largely deployed in front of an occupant, thereby protecting the occupant.

Used as the gas generating means is an inflator comprising a casing having gas outlets, propellant filled in the casing for generating gas, and an igniter for igniting the propellant.

In conventional airbag devices, it is not known to control the amount of gas to be generated from the inflator in accordance with the collision speed of a vehicle.

An airbag device which is widely used has one or two inflators. In case of the two inflators, both of the inflators start to be actuated at a time according to the detection signal of the collision.

Disclosed in Japanese patent application JP 2-310143A (EP 399498A), JP 4-345555A, JP 4-345556A, JP 7-47910A, and GB 2281429A are airbag devices each of which has two inflators or a two-stage inflator which one inflator (one stage) is actuated with some delay of ignition timing relative to the other inflator (stage). However, it is the same as the conventional airbag device that all of the inflators are actuated as the collisi.on is detected and the time delay is fixed.

In the conventional airbag devices, the sentence "the inflators are actuated by detecting the collision" actually means that a collision magnitude detecting system installed in the vehicle determines that "the collision speed is over a threshold" based on the acceleration (deceleration) generated by the collision and thus outputs an inflator actuating signal. The collision speed as the threshold is set to be 12 mph (12 miles/hr) because of reason described later.

When the vehicle comes into collision, the occupant moves forward rapidly and plunges into the airbag. It is preferable that the airbag is fully deployed (i.e. deployed to the state that the airbag is inflated in the maximum size) at a time when the body of the occupant first comes in contact with the airbag. For designing a normal airbag, it is taken into account to ensure a space of 5 inches (125 mm) between a surface of the airbag confronting the occupant and the front surface of the occupant's body being in the normal seated attitude (where the back of the occupant is in contact with the seat back of the seat) when the airbag is in the fully deployed state.

In the normal airbag device, the time period between the ignition of the inflator and the completion of the airbag deployment is estimated to be 30 milliseconds. Therefore, it is necessary to design the conventional airbag device such that the inflator should be ignited 30 milliseconds or more before the occupant's body moves the 5 inches (5") after the collision, that is, the ignition timing of the inflator should be within a range of "Time Period for 5" Movement - 30 milliseconds".

The ignition timing of inflator is referred to as TTF (time to fire). The TTF for normal passenger cars should be 15 milliseconds or less after the collision in case of head-on collision of 30 mph (about 48 km/hr) because of the aforementioned reason.

The conventional collision magnitude detecting system for a vehicle detects acceleration applied to the vehicle with time and detects the magnitude of the collision based on the variation with time of the acceleration.

In a collision velocity detecting system at the current technology level, for example in the event of the head-on collision of 30 mph, it takes 12-14 milliseconds after the collision to determine that the collision speed is over 12 mph, it takes 20-23 milliseconds after the collision to determine that the collision speed is over 20 mph, and it takes 30 to 35 milliseconds after the collision to determine that the collision speed is 30 mph. In case of oblique collision or offset collision, it takes longer time for detection because rate of rise in the acceleration is low.

As mentioned above, TTF is set within the range of "Time Period for 5" Movement minus 30 milliseconds". As it takes a long time for detection of the collision speed, the point where the ignition command of the inflator is outputted should be later than the TTF. For example, when the collision velocity is 30 mph, it is required to ignite the inflator before 15 milliseconds pass after the collision as mentioned above. However, at a point that 15 milliseconds passed, the collision velocity detecting system does not determine yet that the collision speed is 30 mph or more.

Therefore, a current airbag ignition system is structured to output an airbag ignition signal at a point where it is determined that the collision velocity is over 12 mph (a time period required to determine that the collision velocity is over 12 mph is on the order of 12 to 15 milliseconds as mentioned above) to ignite the inflator. By setting TTF to the point where collision speed over 12 mph is detected as described above, the TTF of the inflator is prevented from being later than "Time Period for 5" Movement minus 30 milliseconds" so as to ensure that the airbag can be in the fully deployed state until the occupant plunges into the airbag.

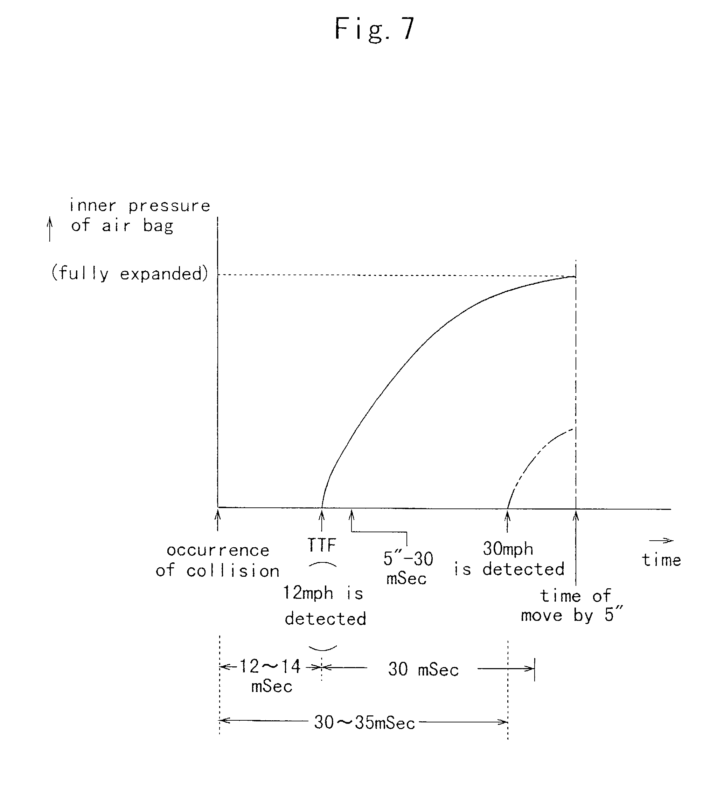

Fig. 7 is a structural diagram for explaining the ignition timing of the inflator and showing the relation between TTF in case of 30 mph collision, "Time Period for 5" Movement minus 30 milliseconds", and the timing of 5" movement.

As about 12 milliseconds pass after the vehicle collision at 30 mph, it is determined that the collision velocity is over 12 mph. At this point, an inflator ignition command is outputted to ignite the inflator. It takes about 30 milliseconds from this point to make the airbag in the full deployed state. The timing of 5" movement (timing when the occupant first comes in contact with the airbag) is after the airbag became in the full deployed state.

As shown in this diagram, the TTF is prior to "Time Period for 5" Movement minus 30 milliseconds".

If the inflator ignition command is outputted after it is determined that the collision speed is over 30 mph, the occupant may plunge into the airbag before the airbag is fully deployed as shown by a two-dot chain line in Fig. 7.

It is an aim of the present invention to provide a method of detecting collision magnitude which enables the detection of the collision magnitude of the vehicle for a short period of time after the vehicle collision.

It is another aim of the present invention to provide a seat belt device and an airbag device in which the winding tensi.on of a seat belt and the amount of inflator gas to be generated are controlled in accordance with the collision magnitude detected by the method of detecting collision magnitude.

It is further another aim of the present invention to provide an airbag device in which the number of inflators actuated increases as the collision speed increases and the timings for actuating the inflators are shifted.

In a method of detecting collision magnitude according to a first aspect, the collision magnitude is detected based on detected acceleration of an accelerometer installed in a vehicle. The collision velocity is detected based on variation with time of the detected acceleration. The collision magnitude is detected based on time difference between a time period until the collision speed reaches a first preset value after the detection of the collision and a time period until the collision speed reaches a second preset value after the detection of the collision.

In the above method of the present invention, when the vehicle comes into collision, an acceleration sensor installed in the vehicle detects acceleration. The collision velocity is calculated based on variation with time of the acceleration (concretely, a value found by integrating the acceleration with time and a value found by differentiating the acceleration with time).

The variation with time of acceleration may differ according to the structure of the vehicle body. However, as the collision velocity is larger, the time difference between a time period until it is detected that the collision velocity exceeds 12 mph after the collision and a time period until it is detected that the collision speed exceeds 20 mph after the collision is shorter. The method of detecting collision magnitude of the present invention is a method which detects the collision magnitude based on the aforementioned time difference.

A seat belt device according to a second aspect comprises a seat belt and a retractor for winding up the seat belt. The seat belt device further comprises a means for winding up the seat belt to a predetermined tension during the collision in accordance with the collision magnitude detected by the aforementioned method of the present invention when the collision is detected.

An airbag device of a third aspect comprises a folded airbag and a gas generator for inflating the airbag. The airbag device further comprises a controller for controlling the amount of gas to be generated from the gas generator in accordance with the collision magnitude detected by the aforementioned method of the present invention when the collision is detected.

An airbag device of a fourth aspect comprises a folded airbag and a gas generator for inflating the airbag. The airbag device further comprises: a collision speed detector for detecting the collision speed of the vehicle; and a controller for controlling the amount of gas to be generated such that a predetermined amount of gas is generated when it is detected that the collision speed exceeds a first threshold, and an increased amount of gas is generated when it is detected that the collision speed exceeds a second threshold which is larger than the first threshold. The controller increases the amount of the latter gas as a time period from a point where the collision speed exceeding the first threshold is detected to a point where the collision speed exceeding the second threshold is detected is shorter.

This airbag device may comprise a plurality of gas generators. The controller may increase the number of the gas generators to be actuated for generating the latter gas as the time difference is shorter.

In the airbag device of the fourth aspect, when it is determined that the collision speed exceeds the first threshold (e.g. 12 mph), for example one of the gas generators is first actuated so as to start the deployment of the airbag.

Then, when it is determined that the collision speed exceeds the second threshold (e.g. 20 mph), the other gas generators are actuated.

If the ignition timings of all the gas generators are set to the point where the collision speed exceeding the second threshold is detected, the TTF should be later than "Time Period for 5" Movement minus 30 milliseconds", so there is possibility that the occupant plunges into the airbag which is not fully deployed. In the airbag device of the present invention, however, a part of the gas generators is first actuated at the point where it is determined that the collision speed exceeds the first threshold so as to start the deployment of the airbag. When the collision speed is relatively low, the airbag is deployed only by the part of the gas generators. When the collision speed is relatively high, the inner pressure of the airbag is increased by actuating the other part of the gas generators. Since the deployment speed of the airbag is increased by the actuation of the other part of the gas generators, the full deployment of the airbag can be completed before the occupant plunges into the airbag even when the timing of 5" movement becomes earlier.

According to the present invention, the amount of gas to be generated is increased when the collision speed exceeding the second threshold is detected. Therefore, the amount of gas to be generated may be increased by one gas generator which has multiple stages.

As the collision speed becomes higher, the time period (hereinafter, referred to as "rate of rise") taken from the detection of the collision speed exceeding the first threshold to the detection of the collision speed exceeding the second threshold becomes shorter. In the present invention, therefore, as the rate of rise is shorter, the amount of gas to be generated is increased after the detection of the collision speed exceeding the second threshold.

Concretely, for example, as the rate of rise is shorter, the number of gas generators to be actuated is increased after the detection of the collision speed exceeding the second threshold. In this case, plural gas generators may be actuated at a time or with some time delay.

An embodiment of the present invention is described hereunder, by way of example only, with reference to the accompanying drawings, in which:-
Figs. 1a, 1b, and 1c are diagrams illustrating variation with time of acceleration during the collision;
Fig. 2 is a diagram illustrating the relation between a differential time Δt and collision velocity;
Figs 3a and 3b are schematic diagrams of a seat belt device according to an embodiment;
Fig. 4 is a side view of a vehicle in which an airbag device according to an embodiment is installed;
Fig. 5 is a schematic diagram of the airbag device according to the embodiment;
Figs. 6a and 6b are diagrams illustrating variation with time of inner pressure of an airbag and showing the operation of the airbag device according to the embodiment; and
Fig. 7 is a diagram showing the relation between ignition timing of the inflator and the inner pressure of the airbag.

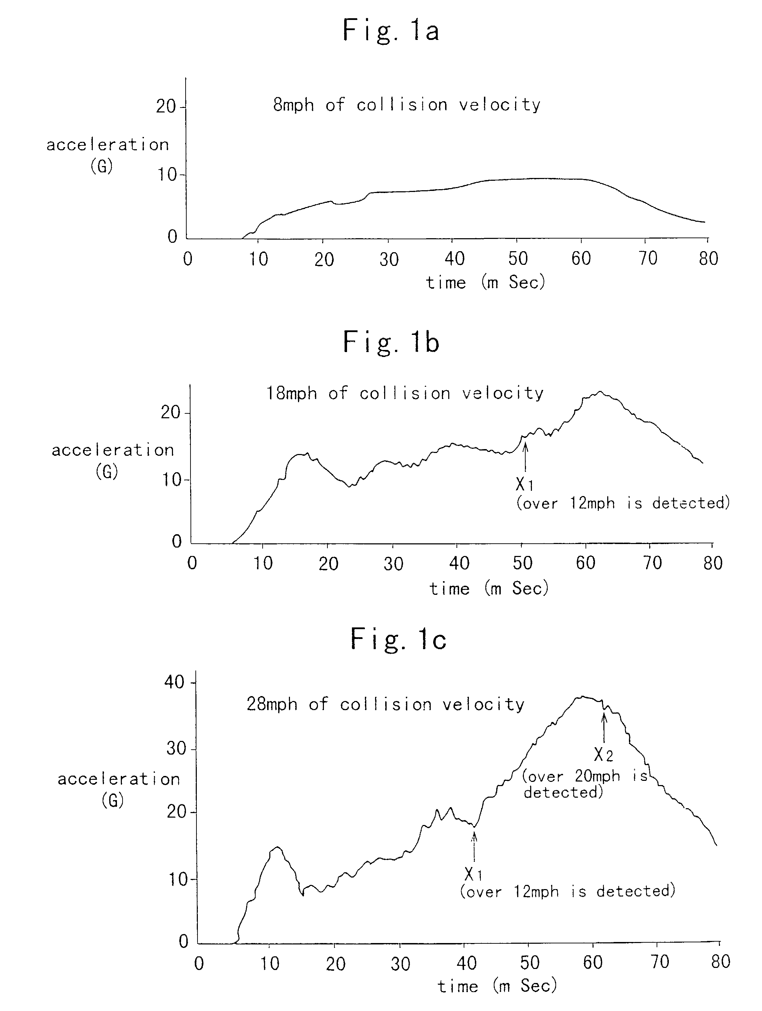

Figs. 1a through 1c show wave forms of acceleration G at different collision speeds when a passenger car made in Japan (displacement 1,000 cc, weight 1,300 kg) was brought into head-on collision with a steel object (weight 200 tons) which is fixed. The axis of ordinates represents G and the axis of abscissas represents time. The collision velocities are 8 mph for Fig. 1a, 18 mph for Fig. 1b, and 28 mph for Fig. 1c.

In Fig. 1a, collision velocity over 12 mph is never detected even though any seconds pass after the collision.

In Fig. 1b, collision velocity over 12 mph is detected when 50 milliseconds pass after the collision, but collision velocity over 20 mph is never detected even though any seconds pass after that.

In Figs. 1a-1c, the arrow X₁ represents a point where collision velocity over 12 mph is detected and the arrow X₂ represents a point where collision velocity over 20 mph is detected.

In Fig. 1c, collision velocity over 12 mph is detected when 42 milliseconds pass after the collision, and collision velocity over 20 mph is detected when 62 milliseconds pass after the collision.

In case where the collision velocity is 38 mph, not illustrated, collision velocity over 12 mph is detected when 35 milliseconds pass after the collision, and collision velocity over 20 mph is detected when 50 milliseconds pass after the collision.

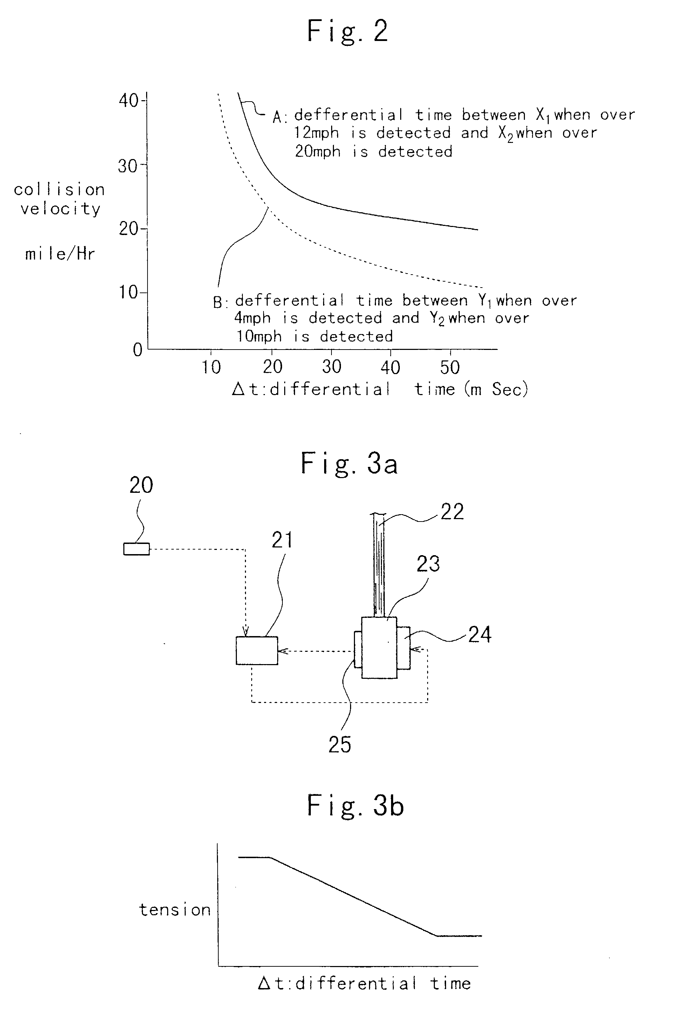

The curve A in Fig. 2 represents the relation between differential time Δt and collision velocity wherein the time difference Δt is between the point (X₁) where the collision speed over 12 mph is detected and the point (X₂) where the collision speed over 20 mph is detected. The curve B in Fig. 2 represents the relation between time difference Δt and collision speed wherein the time difference Δt is between a point Y₁ where collision speed over 4 mph is detected and a point Y₂ where collision speed over 10 mph is detected (both Y₁ and Y₂ are not shown). As shown in the figure, the differential time Δt between the points X₁ and X₂ and the differential time Δt between the points Y₁ and Y₂ get shorter as the collision speed becomes higher. Therefore, the collision magnitude (collision velocity) can be detected based on the time difference Δt.

Fig. 3a is a structural view of a seat belt device according to an embodiment in which the winding of a seat belt is conducted in the collision by the method of detecting collision magnitude. In the seat belt device, detection signals from an acceleration sensor 20 and a tension sensor provided in a seat belt retractor 23 are inputted into a control unit 21, and the control unit 21 outputs a control signal to a retractor drive motor 24.

The control unit 21 calculates the aforementioned time difference Δt based on the detection signal of the acceleration sensor 20 and controls the motor 24 in such a manner that the tensile force of the seat belt 22 wound up becomes larger as the time difference Δt gets shorter as shown in Fig. 3b. Therefore, as the detected collision speed is higher, the force by the seat belt 22 for restraining the occupant can be larger.

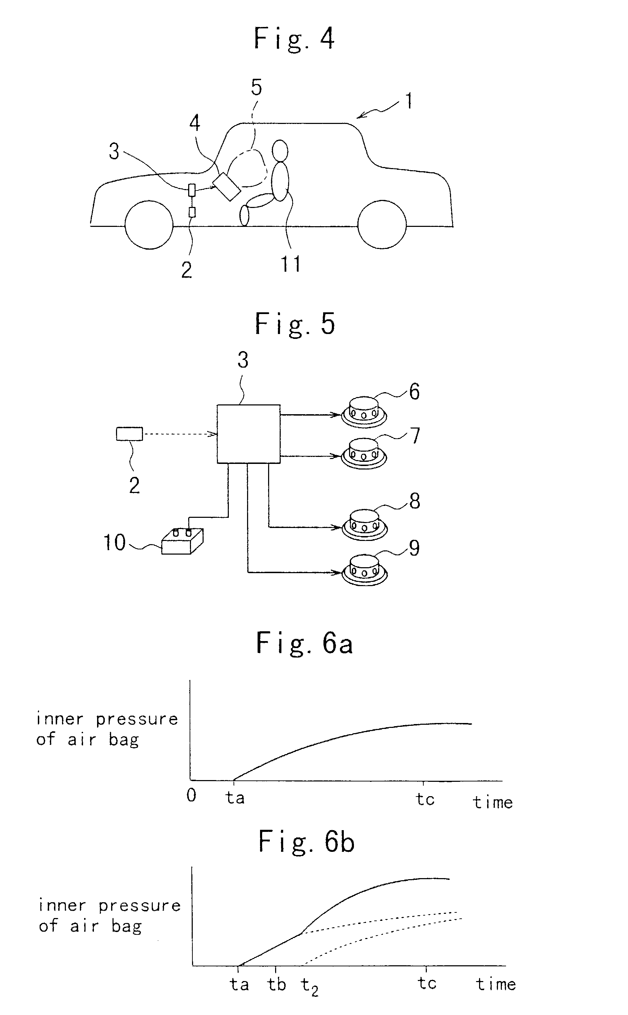

An airbag device according to an embodiment will be described with reference to Figs. 4, 5, 6a, 6b. Installed in a vehicle 1 are an acceleration sensor 2, a control unit 3, and an airbag device 4. The airbag device may be for a passenger seat, a driver's seat, or a rear seat.

The airbag device 4 is structured so that an airbag 5 is deployed by four inflators 6-9. As the vehicle 1 comes into collision, the acceleration at this point is detected by the acceleration sensor 2 and the collision speed is calculated by the control unit 3 based on the variation with time of the detected acceleration. The inflators 6-9 are actuated by the control unit 3 according to the magnitude of the collision speed.

The control unit 3 supplies electrical current from a battery 10 to igniters of the inflators 6-9. The control unit 3 controls the number of the inflators 6-9 to be actuated corresponding to the collision speed. Concretely, non of the inflators is actuated when the collision speed is below the 12 mph, one of the inflators is actuated when the collision speed is from 12 to 20 mph, two of the inflators are actuated when the collision speed is from 20 to 30 mph, and three of the inflators are actuated when the collision speed is over 30 mph.

In the present invention, when plural inflators are actuated, the inflators may be ignited with some time delays.

That is, when the collision speed is below a first threshold (e.g. 12 mph), none of the inflators 6, 7, 8, 9 is actuated. When the collision speed is between the first threshold and a second threshold (e.g. 20 mph), only the first inflator 6 is actuated at a point tₐ when it is detected that the collision speed reaches the first threshold and the other inflators are not actuated. When it is determined that the collision speed is over the first threshold at the point tₐ and it is then further determined that the collision speed is over the second threshold, the first inflator 6 is first actuated at the point tₐ and, after that, one or more of the second through fourth inflators 7,8,9 are actuated at a point t_{b} when it is detected that the collision speed is over the second threshold and/or after the point t_{b}.

As mentioned above, the time difference (rate of rise) between the point tₐ and the point t_{b} becomes shorter as the collision speed is higher. Therefore, as the time difference (rate of rise) between the point tₐ and the point t_{b} is shorter, the number of the inflators 7,8,9 to be actuated is increased. For example, when the rate of rise is 20 to 30 milliseconds, only the second inflator 7 is actuated at the point t_{b} or after the point t_{b}. When the rate of rise is 10 to 20 milliseconds, the second and third inflators 7, 8 are actuated at the point t_{b} and/or after the point t_{b}. When the rate of rise is 10 milliseconds or less, the three inflators 7,8,9 are actuated at the point t_{b} and/or after the point t_{b}.

When some inflator is ignited after the point t_{b}, it is preferable that the time difference between the ignition timing t₂ and the point t_{b} is 0 to 40 milliseconds, more particularly 10 to 20 milliseconds. In case where a means for detecting the wearing of the seat belt is provided, when the seat belt is worn, the value obtained by t₂ - t_{b} is set larger, and when the seat belt is not worn, the value obtained by t₂ - t_{b} is set smaller.

When two or more of the inflators 7,8,9 are actuated after the point t_{b}, all of the inflators may be ignited at a time or with some time delays. The time difference of ignition timings when two of the inflators are ignited with some time delay after the point t_{b} and the time difference between the first ignition timing and the last ignition timing when three of the inflators 7,8,9 are ignited with some time delays after the point t_{b} are preferably 40 milliseconds or less, respectively.

Fig. 6a schematically illustrates variations in the inner pressure of the airbag 5 when only the first inflator 6 is actuated. The pressure increases gradually from the point tₐ. When the first inflator 6 is first actuated and the second inflator 7 is then actuated, as shown in Fig. 6b, the inner pressure of the airbag 5 starts to increase at the point tₐ, and increases by further gas pressure from the second inflator 7.

In any of the cases shown in Figs. 6a, 6b, the occupant 11 plunges into the deployed airbag 5 after the point t_{c} where the airbag 5 is fully largely deployed. At this stage after the point t_{c}, as apparent from Figs. 6a, 6b, the inner pressure of the airbag 5 deployed only by the first inflator 6 is lower than that of the airbag 5 deployed by the inflators 6, 7. Therefore, in case of Fig. 6a, the occupant 11 plunges into the airbag 5 which is softer than that in case of Fig. 6b. Since the speed of the occupant plunging into the airbag 5 is lower than that in case of Fig. 6b because the collision speed of the vehicle is lower, the body of the occupant 11 can be protected well by the soft airbag 5.

In case of Fig. 6b where the vehicle comes into collision at a high speed, the occupant 11 can be securely protected by the airbag 5 of which inner pressure is high. As the collision speed of the vehicle is higher, the number of the inflators 7, 8, 9 to be ignited is increased so that the inner pressure of the fully deployed airbag is correspondingly increased, thereby securely receiving and protecting the occupant.

Though the airbag device of the aforementioned embodiment is provided with four inflators 6-9, the airbag device may be provided with three inflators or with five inflators or more.

According to the present invention, one inflator, which can generate gas at two stages or more and in which the gas generation of the second stage or further stages can be stopped or controlled in its amount by a signal from the control unit, may be employed.

As described above, according to the method of the present invention, the collision magnitude (collision speed) can be detected based on the acceleration during the collision.

Since the collision speed is estimated based on the aforementioned time difference in the method of the present invention, for example even when the collision speed is over 20 mph, the actual collision speed can be detected (predicted) at a point when a detecting device detects collision speed of 20 mph. That is, according to the method of the present invention, the collision speed can be detected (predicted) for a short time period after the collision even when the collision speed is high.

According to the seat belt device of the present invention, the seat belt can be wound up to the predetermined tension during the collision in accordance with the collision speed. Therefore, the body of the occupant can be extremely securely supported by the seat belt.

The airbag device of the present invention controls the inflators (inflator) corresponding to the collision speed of the vehicle, thereby protecting the occupant by the soft airbag with low inner pressure when the vehicle comes into collision at a low speed, and also securely protecting the occupant by the airbag with high inner pressure when the vehicle comes into collision at a high speed.

## Claims

1. A method of detecting collision magnitude based on detected acceleration of an accelerometer installed in a vehicle comprising:
a process of detecting a collision velocity based on vanation with time of the detected acceleration; and
a process of detecting the collision magnitude based on a differential time between a time period until the collision speed reaches a first preset value after the detection of the collision and a time period until the collision speed reaches a second preset value after the detection of the collision.

2. A method as claimed in claim 1, wherein said first preset value is about 12 mph and said second preset value is larger than the first preset value including about 20 mph.

3. A method as claimed in claim 1, wherein said first preset value is selected from a range between about 4 mph and about 12 mph.

4. A method as claimed in any one of claims 1 through 3, wherein the collision magnitude including the collision speed is determined to be higher as the differential time is shorter.

5. A seat belt device for a vehicle comprising a seat belt and a retractor for winding up the seat belt, wherein said seat belt device further comprises means for winding up the seat belt to a predetermined tension during the collision in accordance with the collision magnitude detected by the method as claimed in claim 1.

6. A seat belt device as claimed in claim 5, further comprising a sensor for detecting the tension of the seat belt, wherein said means winds up the seat belt such that the detected tension of said sensor becomes higher as the collision magnitude is larger.

7. A seat belt device as claimed in claim 5 or 6, wherein said means includes a motor.

8. An airbag device for a vehicle comprising a folded airbag and gas generating means for inflating said airbag, wherein
said airbag device further comprises means for controlling an amount of gas to be generated from the gas generating means in accordance with the collision magnitude detected by the method as claimed in claim 1 when the collision is detected.

9. An airbag device for a vehicle comprising a folded airbag and a gas generating means for inflating said airbag,
wherein said airbag device further comprises:
collision speed detecting means for detecting the collision speed of the vehicle; and
control means for controlling the amount of gas to be generated such that a predetermined amount of gas is generated when it is detected that the collision speed exceeds a first threshold, and an increased amount of gas is generated when it is detected that the collision speed exceeds a second threshold which is larger than the first threshold, wherein said control means increases the amount of the latter gas as a time period from a point where the collision speed exceeding the first threshold is detected to a point where the collision speed exceeding the second threshold is detected is shorter.

10. An airbag device as claimed in claim 9, wherein said gas generating means has a plurality of gas generators and wherein said control means increases the number of the gas generators to be actuated for generating the latter gas as said time difference is shorter.
